# EUROPÄISCHE PATENTSCHRIFT

(11) **EP 3 768 452 B1**
(45) Veröffentlichungstag und Bekanntmachung des Hinweises auf die Patenterteilung: **13.04.2022**
(21) Anmeldenummer: 19713418.2
(22) Anmeldetag: 21.03.2019
(51) Int. Cl.: B23B 51/04

(54) **TIEFLOCHBOHRER MIT MEHREREN SPANFORMERN UND MULDEN IN DER SPANFLÄCHE**
DEEP-HOLE DRILL HAVING A PLURALITY OF CHIP-FORMING DEVICES AND RECESSES IN THE RAKE FACE
FORET LONG COMPORTANT PLUSIEURS ÉLÉMENTS DE FORMATION DE COPEAUX ET DES CAVITÉS DANS LA FACE DE COUPE

(30) Priorität: 13.06.2018 DE 102018114138
(43) Veröffentlichungstag der Anmeldung: 27.01.2021
(73) Patentinhaber: Botek Präzisionsbohrtechnik GmbH, 72585 Riederich (DE)
(72) Erfinder: SCHUR, Gotthold, 72639 Neuffen (DE); DEEG, Juergen, 72555 Metzingen (DE)
(74) Vertreter: DREISS Patentanwälte PartG mbB
(86) Internationale Anmeldenummer: PCT/EP2019/057071
(87) Internationale Veröffentlichungsnummer: WO 2019/238288

(56) Entgegenhaltungen:
- WO-A1-2004/087356
- DE-A1-102008 010 833

## Beschreibung

Die Erfindung betrifft einen Tieflochbohrer gemäß dem Oberbegriff des Anspruchs Ein solcher Tieflochbohrer ist aus WO 2004/087356 A bekannt. Die Spanfläche der erfindungsgemäßen Bohrwerkzeuge ist eben und nicht, wie zum Beispiel bei einem Spiralbohrer, gewendelt.

Die für die Offenbarung der Erfindung wesentlichen Begriffe werden unter anderem im Zusammenhang mit der Figurenbeschreibung erläutert. Darüber hinaus werden am Ende der Figurenbeschreibung einzelne Begriffe in der Art eines Glossars erläutert.

Aus der DE 10 2012 106 660 A1, der DE 44 13 932 A1 und der JP 8025120 A sind Tieflochbohrer bekannt, die eine sich in axialer Richtung erstreckende Struktur in der Spanfläche aufweisen. Beim stirnseitigen Nachschleifen bleibt diese Struktur erhalten und der Nachschliff kann auf einer einfachen Schleif-Maschine erfolgen.

Aus DE 103 16 116 A1 ist ein Einlippenbohrer bekannt, der einen Spanformer aufweist, der sich parallel zur äußeren Schneide erstreckt. Ein solcher Spanformer beginnt am Außendurchmesser des Bohrers und erstreckt sich über den größten Teil der äußeren Schneide.

Diese Ausgestaltung eines Spanformers soll ebenfalls zu einer günstigen Formung von Spänen führen und damit eine schnellere Bearbeitung ermöglichen. Die Herstellung eines solchen Spanformers erfolgt durch Schleifen und muss sehr exakt erfolgen. Dazu werden überwiegend numerisch gesteuerte (CNC-) Schleif-Maschinen eingesetzt. Weil der Spanformer parallel zu der äußeren Schneide verläuft, muss beim Nachschleifen eines solchen Einlippenbohrers der Bohrkopf um einem Betrag abgeschliffen werden, welcher mindestens der Breite des Spanformers entspricht, damit in die "unberührte" Spanfläche ein neuer Spanformer eingeschliffen werden kann. Letzteres kann in der Regel nur beim Hersteller des Tieflochbohrers mit der geforderten Genauigkeit erfolgen.

### Aufgabe der Erfindung

Der Erfindung liegt die Aufgabe zugrunde, einen gerade genuteten Tieflochbohrer (Einlippenbohrer oder Zweilippenbohrer) oder ein anderes Bohrwerkzeug mit ebener Spanfläche zu schaffen, der auch zur Zerspanung zäher und/oder langspanender Werkstoffe geeignet ist. Er soll außerdem so einfach nachschleifbar sein, so dass das Nachschleifen auf einer einfachen Schleifmaschine auch beim Anwender erfolgen kann.

Diese Aufgabe wird erfindungsgemäß bei einem Tieflochbohrer umfassend einen Bohrkopf, der eine oder zwei Schneiden aufweist, wobei jeder Schneide eine Spannut zugeordnet ist, wobei jede Schneide eine Spanfläche aufweist und wobei der Bohrkopf eine oder zwei Nebenschneiden aufweist, dadurch gelöst, dass in jeder Spanfläche parallel zu der Schneide und in Längsrichtung des Bohrers voneinander beabstandet mehrere Spanformer und/oder mehrere Mulden angeordnet sind.

Das Nachschleifen des erfindungsgemäßen Tieflochbohrers besteht darin, die Bohrerspitze so weit abzutragen, dass die verschlissene Schneidkante und der zugehörige Spanformer beziehungsweise die zugehörige Mulde vollständig abgetragen werden. Dann entsteht zusammen mit dem nächsten in der Spanfläche bereits vorhandenen Spanformer, bzw. der nächsten Mulde eine neue Schneide, welche die gleiche Geometrie und Gebrauchseigenschaften hat, wie die bei der Erstauslieferung des Tieflochbohrers vorhanden Scheide.

Fertigungstechnisch ist das Einbringen der Spanformer und der Mulden in die Spanfläche anspruchsvoller als das Schleifen der Bohrerspitze. Daher erfolgt das erfindungsgemäße Einbringen mehrerer Spanformer oder mehrerer Mulden beim Hersteller des Tieflochbohrers. Dadurch kann eine gleichbleibende Qualität gewährleistet werden. Außerdem ist es möglich, die Spanfläche und alle in die Spanfläche eingearbeiteten Spanformer oder Mulden auf einmal zu beschichten.

Das Nachschleifen des erfindungsgemäßen Tieflochbohrers betrifft nur die Freifläche des stumpf gewordenen Tieflochbohrers. Die vorhandene Beschichtung von Spanfläche und Spanformern, bzw. Mulden bleibt erhalten. Daher haben die nachgesetzten Schneiden nahezu die gleiche Standzeit, wie die vom Hersteller hergestellte erste Schneide (mit in der Regel beschichteter Freifläche). Das Nachschleifen des erfindungsgemäßen Tieflochbohrers kann vor Ort beim Anwender auf einer einfachen Schleifeinrichtung erfolgen, indem die Spitze so weit nachgesetzt wird, bis ein Spanformer bzw. eine Mulde entfernt wurde. Danach steht die gleiche Schneidengeometrie wieder zur Verfügung. Das Einschicken stumpf gewordener Tieflochbohrer zum Hersteller zum Nachschleifen ist nicht erforderlich. Das vereinfacht und beschleunigt das Nachschleifen enorm und spart erhebliche Kosten ein.

Es hat sich bei Bohrversuchen herausgestellt, dass sich die Späne nicht in den in axialer Richtung versetzt angeordneten nachfolgenden Spanformern "verhaken", sondern über die Spanfläche abgeführt werden, so dass kein Spänestau entsteht.

Es hat sich bei ausgiebigen Versuchen gezeigt, dass die Gefahr eines Werkzeugbruchs durch das Einbringen mehrere Spanformer oder Mulden nicht zunimmt.

Das erfindungsgemäße Konzept lässt sich naturgemäß sowohl bei Einlippenbohrern als auch bei Zweilippenbohrern und anderen Bohrwerkzeugen mit ebener Spanfläche realisieren. Bei beiden Typen von Tieflochbohrern ist die Spanfläche eben und daher gut zugänglich, so dass in die Spanfläche mit Hilfe einer Schleifscheibe, eines Schleifstifts, durch Erodieren oder Laserabtragen die gewünschte Zahl von Spanformern oder Mulden eingebracht werden kann.

Es liegt auf der Hand, dass die Erfindung nicht auf bestimmte Geometrien von Spanformern oder Mulden beschränkt ist. Ein Spanformer oder eine Mulde kann in einer Ebene, die orthogonal zu der Schneide verläuft, die Form eines gleichschenkligen oder ungleichschenkligen Dreiecks haben. Sie können auch im Querschnitt die Form eines Kreissegments oder eine andere gekrümmte Form aufweisen. Es ist auch möglich, dass der Spanformer oder die Mulden aus geraden Flächen und/oder (einfach oder mehrfach) gekrümmten Flächen zusammengesetzt sind.

In weiterer vorteilhafter Ausgestaltung der Erfindung ist auch ein Abstand zwischen einem Rand der Mulden und der Nebenschneide vorhanden. Dies bedeutet, dass auch die Nebenschneide durch die Mulde nicht geschwächt wird. Das wirkt sich darüber hinaus positiv auf die Standzeit der Schneidecke aus, die sich aus dem Schnittpunkt der äußeren Schneide und der Nebenschneide ergibt. Die erfindungsgemäßen Mulden in der Spanfläche schwächen die Schneidecke nicht. Das ist besonders vorteilhaft, weil der Verschleiß eines Tieflochbohrers in der Regel an der Schneidecke beginnt. Gleichzeitig wird durch die Mulden die Spanbildung verbessert und es können auch langspanende Werkstoffe effizient bearbeitet werden.

In weiterer vorteilhafter Ausgestaltung der Erfindung sind in der Spanfläche des Tieflochbohrers zwei oder mehr parallel zueinander verlaufende Reihen von Spanformern und/oder Mulden eingebracht. Dadurch ist es möglich, die Vorteile beider die Spanbildung beeinflussenden Elemente (Spanformer und Mulden) zu kombinieren.

Der erfindungsgemäße Tieflochbohrer kann auch mit einem Spanteiler versehen werden, welcher die Schneide in einen inneren Abschnitt und einen äußeren Abschnitt teilt. Dadurch wird die Breite der Späne reduziert.

Es hat sich weiter als vorteilhaft erwiesen, wenn dem inneren Abschnitt der Schneide eine Reihe von Spanformern oder Mulden zugeordnet ist. Entsprechend kann dem äußeren Abschnitt der Schneide eine Reihe von Spanformern oder Mulden zugeordnet werden. Es ist auch möglich, dass nur einer der beiden Schneiden oder eine Reihe von Mulden oder eine Reihe von Spanformern zugeordnet ist (nicht dargestellt).

Daraus ergeben sich weitere sehr effektive Ausführungsformen, welche mit einem relativ geringen Aufwand für das Einbringen der Spanformer oder Mulden einen sehr großen positiven Effekt auf die Spanbildung erreichen. In weiterer vorteilhafter Ausgestaltung der Erfindung ist vorgesehen, dass zumindest der Bohrkopf des erfindungsgemäßen Tieflochbohrers nach dem Einbringen der Spanformer oder Mulden ganz oder teilweise mit einer Verschleißschutzschicht, insbesondere einer Hartstoffbeschichtung versehen ist.

Die erfindungsgemäßen Vorteile werden auch durch die erfindungsgemäßen Verfahren gemäß dem Anspruch 15 erreicht.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - mehrere Ausführungsbeispiele der Erfindung dargestellt sind.

Es liegt auf der Hand, dass die Erfindung bei verschiedensten Formen und Geometrien von Spanformern und Mulden angewandt werden kann. Daher beschränken die in den Figuren dargestellten Geometrien von Spanformern und Mulden nicht den Schutzbereich der beanspruchten Erfindung, sondern dienen überwiegend der Veranschaulichung.

### Zeichnung

Es zeigen:
Figuren 1 und 2 einen Einlippenbohrer (Stand der Technik);
Figur 3 eine Ansicht von vorne auf den Einlippenbohrer gemäß Figur 1;
Figur 4 einen erfindungsgemäßen Einlippenbohrer;
Figur 5 einen Teil-Schnitt entlang der Linie C in Figur 4;
Figur 6 einen weiteren erfindungsgemäßen Einlippenbohrer;
Figur 7 einen Teil-Schnitt entlang der Linie C in Figur 6;
Figur 8 einen erfindungsgemäßen Zweilippenbohrer;
Figur 9 einen weiteren erfindungsgemäßen Einlippenbohrer;
Figur 10 einen weiteren erfindungsgemäßen Einlippenbohrer mit Spanteiler und Spanformern sowie
Figur 11 einen weiteren erfindungsgemäßen Einlippenbohrer mit Spanteiler und Mulden.

### Beschreibung der Ausführungsbeispiele

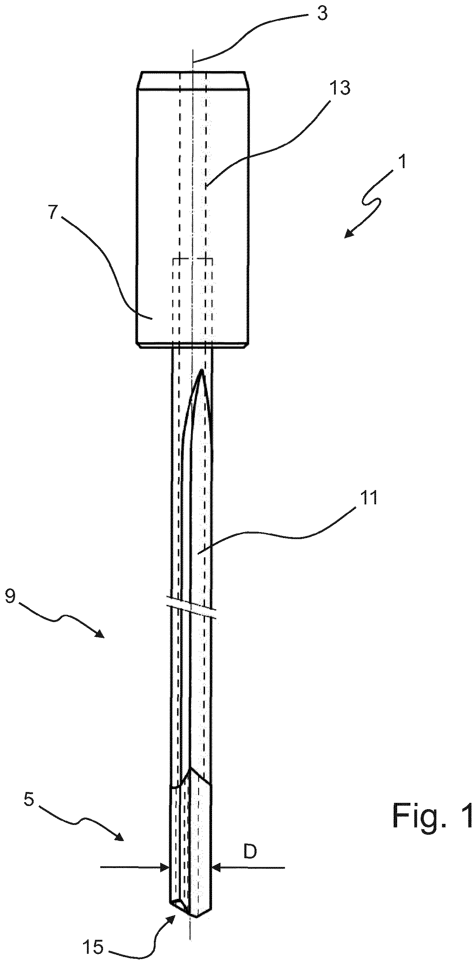

Bei allen Figuren werden für die gleichen Elemente beziehungsweise Bauteile die gleichen Bezugszeichen verwendet. In der Figur 1 ist ein in seiner Gesamtheit mit dem Bezugszeichen 1 versehener Einlippenbohrer dargestellt. Eine Mittelachse 3 ist gleichzeitig auch die Drehachse des Einlippenbohrers 1 beziehungsweise des Werkstücks (nicht dargestellt), wenn dieses beim Bohren in Rotation versetzt wird.

Ein Durchmesser des Einlippenbohrers 1 ist mit D bezeichnet. Der Einlippenbohrer 1 setzt sich aus drei Hauptkomponenten zusammen, nämlich einem Bohrkopf 5, einer Einspannhülse 7 und einem Schaft 9. Zweilippenbohrer haben den gleichen Aufbau und werden daher nicht gesondert dargestellt. Dieser Aufbau ist dem Fachmann sowohl von Einlippenbohrern 1 als auch von Zweilippenbohrern (nicht dargestellt) bekannt und wird daher nicht im Detail erläutert.

In dem Schaft 9 und dem Bohrkopf 5 ist eine Längsnut 11 vorhanden, die auch als Sicke bezeichnet wird. Die Längsnut 11 hat einen Querschnitt annähernd in Form eines Kreissegments mit einem Winkel üblicherweise von etwa 90° bis 130°. Die Längsnut 11 erstreckt sich von der Spitze des Bohrers bis vor die Einspannhülse 7. Wegen der Längsnut haben Bohrkopf 5 und Schaft 9 einen Querschnitt annähernd in der Form eines Kreissegments mit einem Winkel von üblicherweise 230° bis 270° (Ergänzungswinkel zum Winkel der Längsnut).

Ein Kühlkanal 13 erstreckt sich über die gesamte Länge des Einlippenbohrers 1. An einem stirnseitigen Ende der Einspannhülse 7 wird Kühlmittel oder eine Mischung aus Kühlmittel und Luft unter Druck in den Kühlkanal 13 gefördert. Das Kühlmittel beziehungsweise das Gemisch aus Kühlmittel und Luft tritt im am gegenüberliegenden vorderen Ende 15 wieder aus dem Kühlkanal 13 aus. Das Kühlmittel hat mehrere Aufgaben. Es sorgt zum einen zur Kühlung und Schmierung der Schneide und der Führungsleisten. Außerdem fördert es die beim Bohren entstandenen Späne über die Längsnut 11 aus dem Bohrloch heraus.

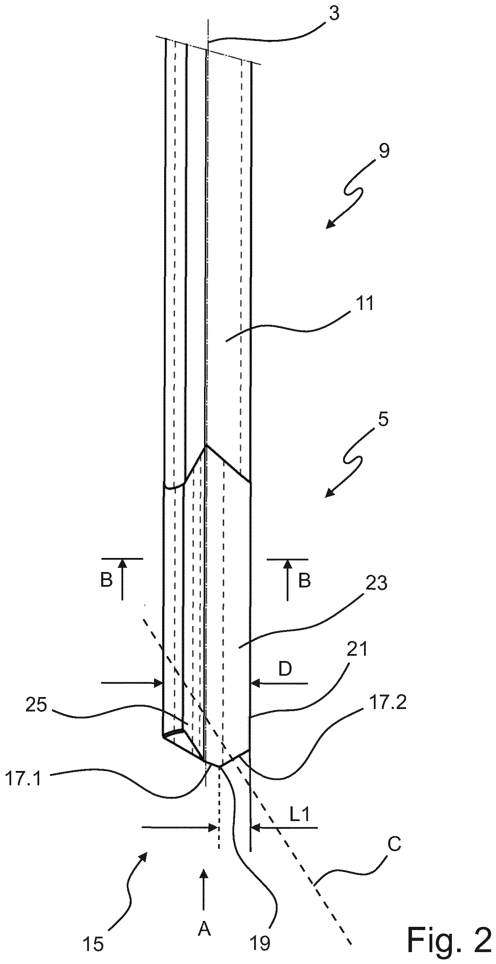

Das vordere Ende 15 ist in der Figur 2 etwas vergrößert dargestellt. Anhand dieser Figur werden Elemente des Bohrkopfs 5 näher erläutert.

Eine Schneide 17 besteht bei Einlippenbohrern 1 üblicherweise aus einer Innenschneide 17.1 und einer Außenschneide 17.2. Eine Schneidenspitze trägt das Bezugszeichen 19. Wie bei Einlippenbohrern üblich, ist die Schneidenspitze 19 radial beabstandet zu der Mittelachse 3 angeordnet. Die Innenschneide 17.1 erstreckt sich von der Mittelachse 3 bis zur Schneidenspitze 19. Die Außenschneide 17.2 erstreckt sich von der Schneidenspitze 19 ausgehend in radialer Richtung bis an den Außendurchmesser D des Bohrkopfs 5 und endet an einer Nebenschneide 21.

Ein Abstand der Schneidenspitze 19 von der Nebenschneide 21 ist in der Figur 2 mit L₁ bezeichnet. Die (gerade) Längsnut 11 wird durch eine ebene Spanfläche 23 und eine ebene Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3. Das muss jedoch nicht zwingend so sein.

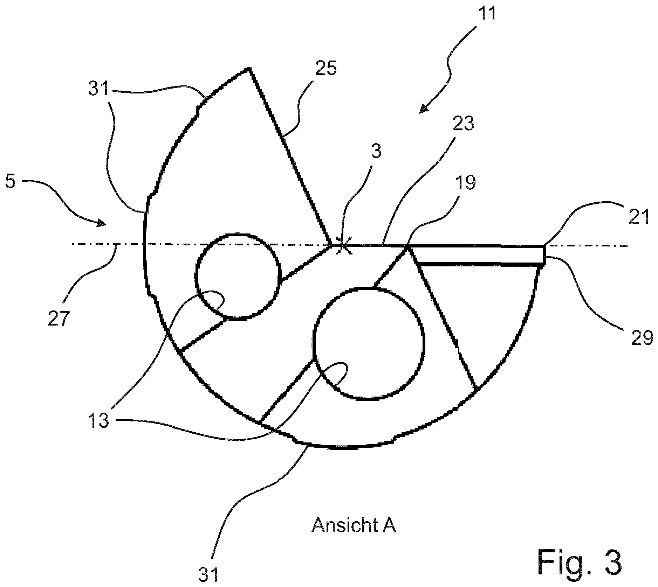

In der Figur 3 ist die Mittelachse 3 als "X" dargestellt. Gut zu erkennen ist auch die gerade (Längs-)Nut 11. Sie wird durch eine Spanfläche 23 und eine Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3. Durch die Mittelachse 3 verläuft ebenfalls eine durch eine strichpunktierte Linie angedeutete Spanflächenebene 27. Die Spanflächenebene 27 ist eine geometrische Definition, die nicht immer an dem Einlippenbohrer sichtbar ist. Die Spanflächenebene 27 ist dadurch definiert, dass sie parallel zur Spanfläche 23 und durch die Mittelachse 3 verläuft.

Wenn die Spanfläche 23 durch die Mittelachse 3 verläuft, dann fallen Spanflächenebene 27 und Spanfläche 23 zusammen und man kann die Spanflächenebene 27 sehen.

In der Figur 3 ist die Innenschneide 17.1 als Linie zwischen der Mittelachse 3 und der Schneidenspitze 19 zu erkennen. Entsprechend ist die Außenschneide 17.2 als Linie zwischen der Schneidenspitze 19 und der Nebenschneide 21 zu erkennen. In der Ansicht von vorne fallen die Innenschneide 17.1 und die Außenschneide 17.2 mit der Spanfläche 23 zusammen. Aus Gründen der Übersichtlichkeit der Figur 3 sind die Bezugszeichen 17.1 und 17.2 nicht eingetragen.

An dem Bohrkopf 5 sind über den Umfang verteilt mehrere Führungsleisten 29 und 31 ausgebildet. Die Führungsleiste 29 und die Spanfläche 23 bilden dort, wo sie einander schneiden, die Nebenschneide 21. Diese Führungsleiste wird nachfolgend als Rundschlifffase 29 bezeichnet. Die Rundschlifffase 29 und die Führungsleisten 31 haben die Aufgabe, den Bohrkopf 5 in der Bohrung zu führen.

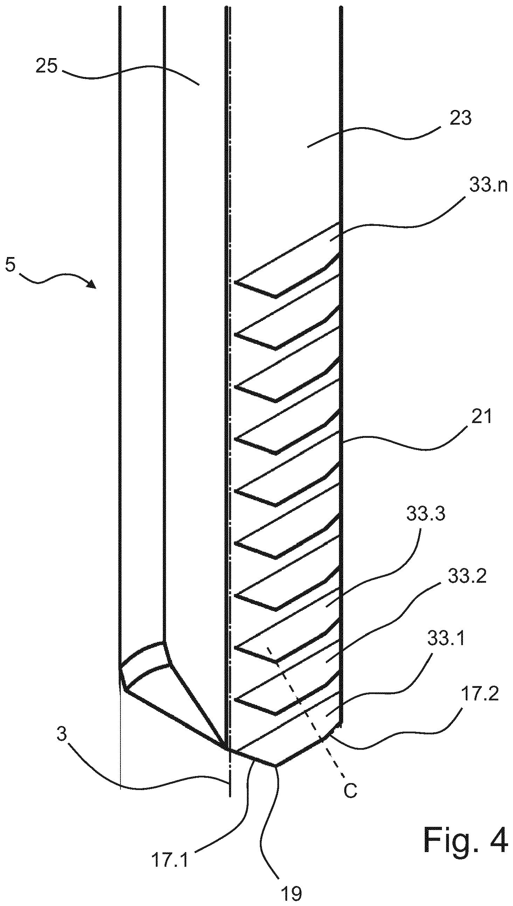

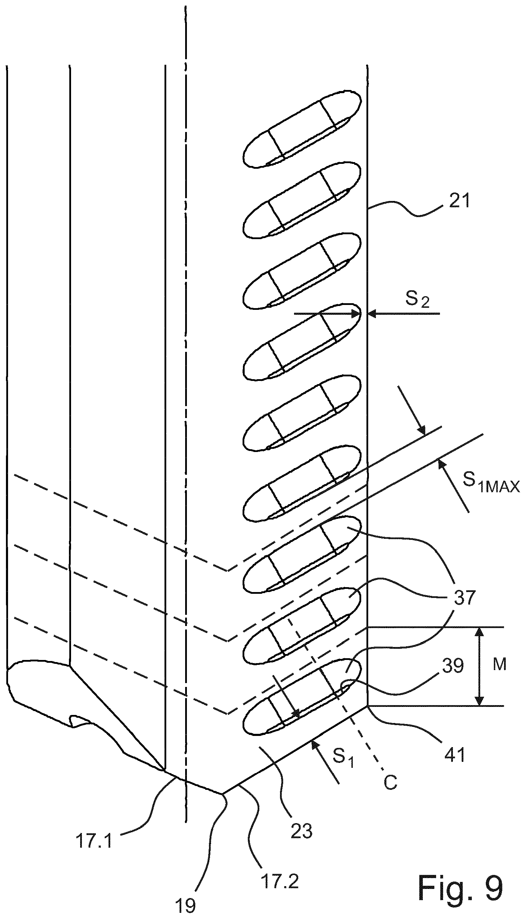

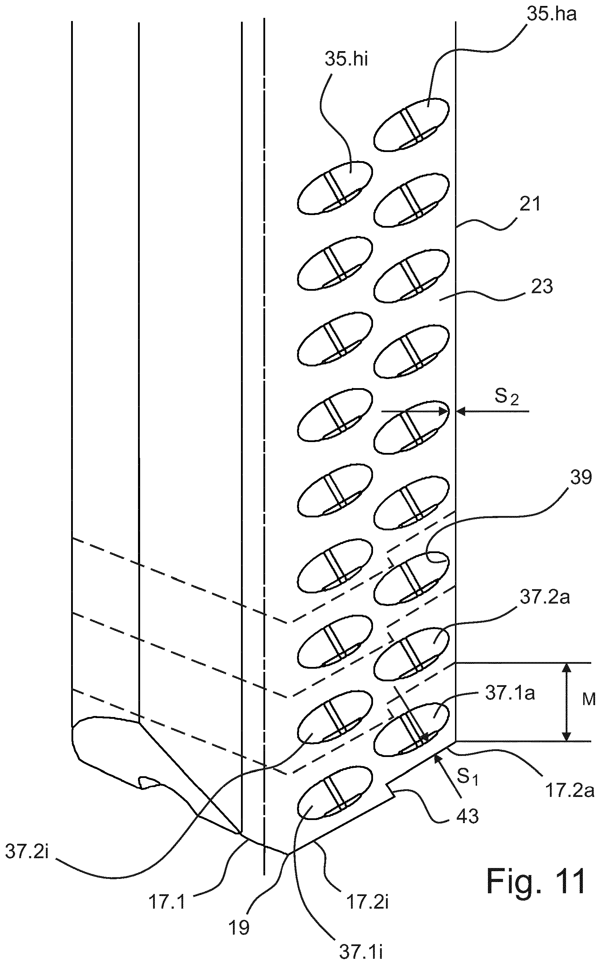

In der Figur 4 ist ein erstes Ausführungsbeispiel eines erfindungsgemäßen Einlippenbohrers dargestellt. In dieser Ansicht sieht man die Spanfläche 23 von oben. In der Spanfläche 23 sind hintereinander in axialer Richtung zueinander beabstandet mehrere Spanformer 33 eingebracht. Die Spanformer 33 können durch Schleifen, Erodieren oder Abtragen mittels Laserstrahl oder ein anderes geeignetes Verfahren in die Spanfläche 23 eingebracht werden. Letztendlich hängt die Wahl des Verfahrens von den technologischen und geometrischen Randbedingungen ab. Beispielsweise können große Schleifscheiben im hinteren Bereich der Spanfläche 23, dort wo die Spanfläche 23 von der Wand 25 begrenzt wird, nicht in die Spanfläche 23 eintauchen. Daher müssen kleine Schleifscheiben oder Schleifstifte eingesetzt werden. Dadurch ergeben sich gewisse Restriktionen bei der Geometrie der Spanformer und der Mulden. Manchmal ist es daher erforderlich, die Spanformer 33 durch Erodieren oder Abtragen mittels Laserstrahl einzubringen. Mit diesen Verfahren können nahezu alle gewünschten Formen von Spanformern 33 oder Mulden 37 (siehe Figur 9 und 11) in die Spanfläche 23 eingebracht werden.

Letztendlich ist die geforderte Geometrie der Spanformer bzw. der Mulden ausschlaggebend für die Wahl des Herstellungsverfahrens.

Wie aus der Figur 4 gut ersichtlich, schließt der Spanformer 33.1 unmittelbar an die äußere Schneide 17.2 an; bzw. bildet zusammen mit der Freifläche die Schneide 17.2. Zwischen dem Spanformer 33.1 und der äußeren Schneide 17.2 ist die Spanfläche 23 nicht mehr vorhanden.

Wenn die Schneiden 17.1 und/oder 17.2 verschlissen sind, dann besteht bei dem erfindungsgemäßen Tieflochbohrer 1 die Möglichkeit, die Spitze des Bohrkopfs 5 so weit abzutragen, bis die äußere Schneide 17.2 den zweiten Spanformer 33.2 erreicht hat. Dieses Nachsetzen beziehungsweise das Abschleifen der Bohrerspitze beinhaltet im Wesentlichen das Abtragen im Bereich der Freifläche und der angrenzenden Bereiche der Bohrerspitze. Das lässt sich beispielsweise durch einen Facettenschliff auf einfachen Schleifeinrichtungen ohne weiteres realisieren.

Wenn die Bohrerspitze in der geschilderten Weise nachgesetzt wurde, steht wieder ein Tieflochbohrer mit einer Schneide 17.2 und einem Spanformer 33.2 zur Verfügung, welcher die gleichen Eigenschaften hat wie ein vom Hersteller ausgelieferter Tieflochbohrer. Dieser Vorgang kann mehrere Male nacheinander ausgeführt werden, bis der letzte Spanformer 33.n "verbraucht" ist.

Es ist offensichtlich, dass durch die erfindungsgemäße Anordnung mehrerer Spanformer 33 oder Spanmulden 37 (siehe z. B. die Figur 9) die Nutzungsdauer des Tieflochbohrers 1 erheblich erhöht werden kann und das Nachschleifen vor Ort signifikant erleichtert wird.

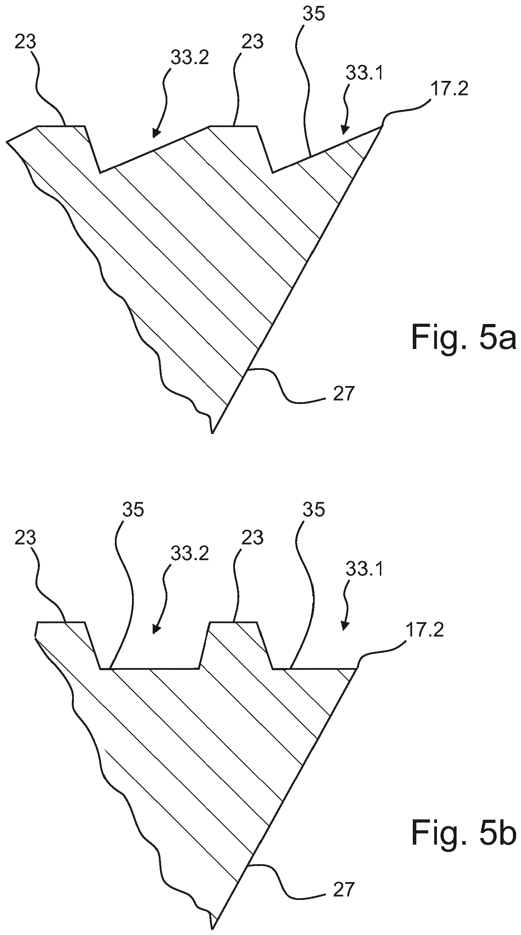

In den Figuren 5a und 5b ist ein Schnitt durch eine Ebene entlang der Linie C in der Figur 4 dargestellt. Aus diesem Schnitt ergeben sich beispielhafte Querschnitte eines Spanformers 33. In dem in Figur 5a dargestellten Beispiel hat der Spanformer im Querschnitt die Form eines unregelmäßigen Dreiecks. Der Spanwinkel des Bohrers wird durch die Spanleitfläche 35 des Spanformers 33 bestimmt. Wenn ein anderer Spanwinkel gewünscht wird, dann kann beim Einbringen des Spanformers 33 die Spanleitfläche 35 entsprechend dem gewünschten Spanwinkel anders geneigt werden.

Figur 5b zeigt eine andere besipsielhafte Ausgestaltung des Spanformers 33, der im Querschnitt die Form eines Trapezs hat. In diesem Beispiel beträgt der Spanwinkel 0°. Wichtig im Zusammenhang mit der Erfindung ist auch, dass die Freifläche 27 und die Spanleitfläche 35 sich in beiden Fällen schneiden schneiden und dort die äußere Schneide 17.2 bilden. Im Beispiel aus Figur 5a liegt die Schneide 17.2 auf der Höhe der Spanfläche 23; im Beispiel aus Figur 5b liegt die Schneide 17.2 hingegen unterhalb der Spanflächenebene.

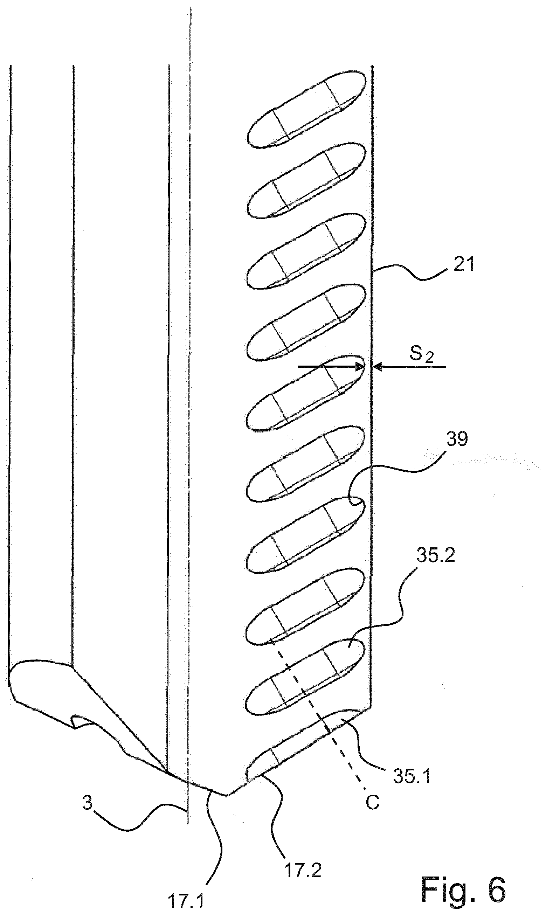

In der Figur 6 ist ein weiteres Ausführungsbeispiel eines erfindungsgemäßen Spanformers dargestellt. Bei diesem Ausführungsbeispiel ist der Spanformer so gestaltet, dass er nicht bis zur Nebenschneide 21 reicht. Es verbleibt also ein Abstand S₂ zwischen einem Rand 39 des Spanformers 35 und der Nebenschneide 21. Bei diesem Ausführungsbeispiel wird die äußere Schneide 17.2 so weit zurückgesetzt, dass etwa der halbe Spannformer 35 abgeschliffen ist. Dies lässt sich aus dem Vergleich zwischen dem ersten Spanformer 35.1 und dem zweiten Spanformer 35.2 gut erkennen.

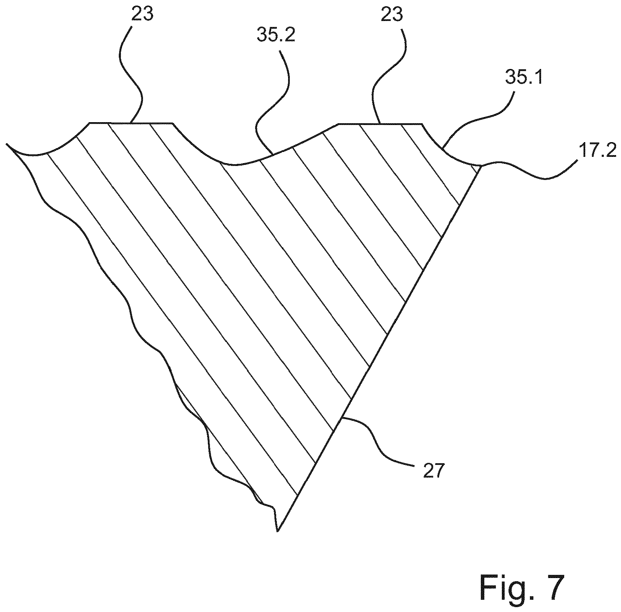

In der Figur 7 ist ein Schnitt entlang der Ebene C in der Figur 6 dargestellt. Daraus wird deutlich, dass erstens der Spanformer 35 bei diesem Ausführungsbeispiel einen annähernd kreisbogenförmigen Querschnitt hat und die äußere Schneide 17.2 sich nicht auf Höhe der Spanfläche 23 befindet, sondern etwas tiefer angeordnet ist.

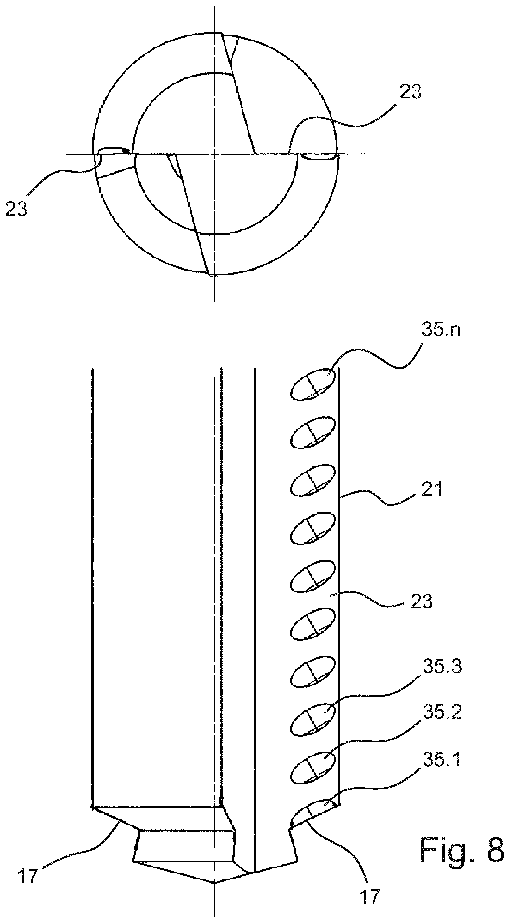

In der Figur 8 ist ein Ausführungsbeispiel eines erfindungsgemäßen Zweilippenbohrers dargestellt. Auch hier sind die Spanformer 35 so angeordnet, wie in dem Ausführungsbeispiel gemäß der Figur 6.

Bei diesem Werkzeug sind zwei Schneiden 17 vorhanden. In der Ansicht von vorne sind beide Spanflächen 23 und die zugehörigen Spanformer 35 zu erkennen. Auch hier wurde ein Teil des ersten Spanformers 35.1 weggeschliffen. Alle im Zusammenhang mit Einlippenbohrern dargestellten Ausführungsbeispiele von Spanformern 33, 35 und Mulden 37 können bei Zweilippenbohrern eingesetzt werden und umgekehrt.

In der Figur 9 ist ein weiteres Ausführungsbeispiel eines erfindungsgemäßen Tieflochbohrers dargestellt, bei dem erfindungsgemäße Mulden 37 in die Spanfläche 23 eingebracht wurden. Zwischen der Schneide 17 und dem Rand 39 der Mulde 37 ist ein Abstand S₁ vorhanden. In Folge dessen verbleibt zwischen der Mulde 37 und der äußeren Schneide 17.2 zumindest ein schmaler Streifen der Spanfläche 23. Dieser schmale Streifen stabilisiert die Schneide 17.2 und erhöht somit die Standzeit der äußeren Schneide 17.2. Trotz dieses Abstands S₁ beeinflusst die hinter der Schneide 17.2 befindliche Mulde 37 die über sie gleitenden Späne (nicht dargestellt). Diese Mulden 37 verformen oder beeinflussen den Span so, dass die beim Tiefbohren gewünschten kurzen Späne entstehen.

Zwischen einem Rand 39 der in Figur 9 beispielhaft dargestellten Mulden 37 ist ein Abstand S₂ zu der Nebenschneide 21 vorhanden, so dass die Nebenschneide 21 durch die Mulde 37 nicht geschwächt wird. Das gleiche gilt auch für erfindungsgemäße Spanformer (Siehe z. B. Figuren 6 und 8). Ganz besonders positiv wirkt sich das auf die Schneidecke 41 aus, die, anders als beim Einsatz von Spanformern gemäß Figur 4, durch die Mulden 37 nicht geschwächt wird.

Um das bereits mehrfach erwähnte "Nachsetzen" der Schneidenspitze eines stumpf gewordenen erfindungsgemäßen Bohrers zu veranschaulichen, sind in den Figuren 9 und 11 stellvertretend auch für die anderen Ausführungsbeispiele durch eine unterbrochene Linie die Lage der Schneide 17 angedeutet, wenn diese einmal, zweimal oder dreimal nachgeschliffen wurde. Aus diesen Darstellungen wird deutlich, dass die erfindungsgemäße Schneidengeometrie eines stumpf gewordenen Bohrers wieder hergestellt wird, wenn die Bohrerspitze 19 und mit ihr die Innenschneide 17.1 und die Außenschneide 17.2 um das Maß "M" abgeschliffen oder "nachgesetzt" wurde.

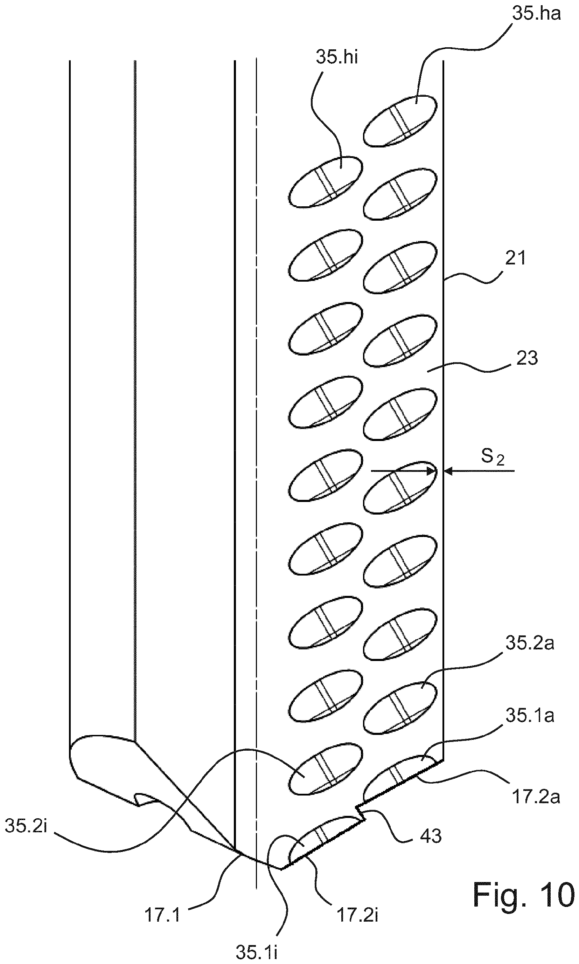

In der Figur 10 ist ein weiteres Ausführungsbeispiel eines erfindungsgemäßen Tieflochbohrers dargestellt. Bei diesem Tieflochbohrer ist die äußere Schneide 17.2 durch einen Spanteiler 43 zweigeteilt (siehe die Bezugszeichen 17.2i und 17.2a).

Dem entsprechend sind bei diesem Ausführungsbeispiel zwei Reihen von Spanformern 35.1i bis 35.ni und 35.1a bis 35.na in der Spanfläche 23 vorhanden. Es ist auch möglich, dass nur einer äußeren Schneide 17.2i oder 17.2a eine Reihe von Spanformern 35.1i bis 35.ni oder 35.1a bis 35.na zugeordnet ist (nicht dargestellt).

Es ist auch möglich, dass bei einem Tieflochbohrer mit einer durch einen Spanteiler 43 zweigeteilten äußeren Schneide 17.2 (siehe die Bezugszeichen 17.2i und 17.2a) eine oder zwei Reihen von Mulden 37.1i bis 37.ni oder 37.1a bis 37.na zugeordnet sind. In der Figur 11 ist ein solcher Tieflochbohrer mit zwei Reihen von Mulden exemplarisch dargestellt.

Solange der Abstand S₁ zwischen Rand 39 und Schneide 17.2 größer Null ist, handelt es sich um eine Mulde 37. Sobald der Abstand S₁ gleich null oder kleiner ist, handelt es sich definitionsgemäß um einen Spanformer 33, 35. Dann kann der Spanwinkel kleiner null, gleich null oder größer null sein, in Abhängigkeit der relativen Lage von Schneide 17.2 und Spanformer 33, 35.

Wenn man die äußere Schneide 17.2 noch weiter zurücksetzt, ergeben sich positive Spanwinkel. Danach fällt der Spanwinkel wieder auf einen Wert gleich Null. Dieser Vorgang wiederholt sich mit jedem Zurücksetzen. Anhand dieser Darstellung soll verdeutlicht werden, dass es durch das mehr oder minder weiter Zurücksetzen der Bohrerspitze es möglich ist, entweder eine erfindungsgemäße Mulde 37 oder einen Spanformer mit verschiedenen Spanwinkeln zu realisieren.

Ein weiterer Vorteil des erfindungsgemäßen Bohrwerkzeugs ist darin zu sehen, dass eine eventuell vorhandene Verschleißschutzbeschichtung auf der Spanfläche 23.1 und 23.2, den Spanformern 33, 35 und den Mulden 37 sowie der Rundschlifffase 29 und den Führungsleisten 31 erhalten bleiben, wenn der Bohrer nachgeschliffen wird.

Nachfolgend werden einige Begriffe stichwortartig erläutert und definiert.

Die Gesamtform aller schneidenden und nicht schneidenden Flächen stirnseitig am Bohrkopf wird als **Anschliff** bezeichnet. Dazu gehören auch Flächen, die nicht direkt an die Schneidkanten angrenzen, beispielsweise Flächen zur Lenkung des Kühlmittelstroms oder auch zusätzliche Freiflächen, um den Bohrer sauber schneiden zu lassen. Der Anschliff bestimmt zu einem großen Teil die Formung der Späne und wird auf den zu bearbeitenden Werkstoff abgestimmt. Ziele der Abstimmung sind dabei unter anderem die Formung möglichst günstiger Späne, eine hohe Bearbeitungsgeschwindigkeit, eine möglichst lange Lebensdauer des Bohrers und die Einhaltung der erforderlichen Qualitätsmerkmale der Bohrung wie z.B. Durchmesser, Oberfläche oder Geradheit (Mittenverlauf).

Zur Erhöhung der Lebensdauer kann der Bohrkopf mit einer **Beschichtung** als Verschleißschutz versehen sein; meist aus der Gruppe Metall-Nitride oder Metall-Oxyde; auch in mehreren abwechselnden Lagen. Die Dicke beträgt üblicherweise ca. 0,0005 bis 0,010 mm. Die Beschichtung erfolgt durch chemische oder physikalische Vakuumbeschichtungsverfahren. Die Beschichtung kann am Umfang des Bohrkopfes, an den Freiflächen oder an den Spanflächen vorgesehen sein, teilweise kann auch der gesamte Bohrkopf beschichtet werden.

**Einlippenbohrer** und **Zweilippenbohrer** sind Varianten von Tieflochbohrern. Unter Tieflochbohrern werden Werkzeuge verstanden, die nach verschiedenen bekannten Tiefbohrsystemen (zum Beispiel BTA, Ejektorbohren, Einlippen- oder zweilippen-Tieflochbohren) arbeiten.

Einlippenbohrer und Zweilippenbohrer sind lang und schlank und weisen eine Mittelachse auf. Ihre Spanfläche ist eben; daher bezeichnet man sie auch als "gerade genutete" Werkzeuge. Sie werden verwendet zum Herstellen von Bohrungen mit einem großen Verhältnis von Länge zu Durchmesser. Sie werden vorwiegend in der industriellen Metallbearbeitung eingesetzt, wie bei der Produktion von Motorkomponenten, insbesondere bei der Produktion von Common-Rails oder Getriebewellen.

Einlippenbohrer werden üblicherweise in einem Durchmesserbereich von ca. 0,5 bis 50 mm eingesetzt. Es sind Bohrungen mit einer Länge von bis etwa 6.000 mm möglich.

Das Verhältnis von Länge zu Durchmesser (L/D) der Bohrung liegt üblicherweise in einem Bereich von ca. 10 bis über 100; es kann aber auch ca. 5 und bis etwa 250 betragen.

Einlippenbohrer zeichnen sich dadurch aus, dass eine Bohrung in hoher Qualität in einem Hub erzeugt werden kann. Sie können in Werkzeugmaschinen wie z.B. Drehmaschinen, Bearbeitungszentren oder speziellen Tiefbohrmaschinen, eingesetzt werden.

Der Zerspanungsvorgang erfolgt durch eine Relativbewegung des Bohrers zum Werkstück in Drehrichtung um eine gemeinsame Mittelachse, sowie einer Relativbewegung des Bohrers auf das Werkstück zu in Richtung der gemeinsamen Mittelachse (Vorschubbewegung). Die Drehbewegung kann durch den Bohrer und/oder das Werkstück erfolgen. Das Gleiche gilt für die Vorschubbewegung.

Die **Freifläche** ist die Fläche an der Spitze des Bohrkopfs, welche der bearbeiteten Werkstückoberfläche gegenüber liegt.

Am Umfang des Bohrkopfes sind **Führungsleisten** angeordnet zur Abstützung der beim Schneiden entstehenden Schnittkräfte in der gebohrten Bohrung. Führungsleisten sind Zylindersegmente mit dem Durchmesser des Bohrkopfes; sie liegen während des Bohrvorgangs an der Bohrungswand an. In Umfangsrichtung zwischen den Führungsleisten sind am Bohrkopf radial zurückgesetzte Segmente mit kleinerem Durchmesser angeordnet, so dass ein Spalt zwischen Bohrungswand und Bohrkopf entsteht. Der Spalt dient der Ansammlung von Kühlmittel zur Kühlung und Schmierung der Führungsleisten.

Es gibt verschiedene Anordnungen von Führungsleisten, Ausführung abhängig vom zu bearbeitenden Werkstoff. Die erste Führungsleiste, die sich entgegen der Drehrichtung des Bohrers an die Spanfläche anschließt, wird als **Rundschlifffase** bezeichnet.

Durch den **Kühlkanal** wird Kühlmittel, oder eine Mischung aus Kühlmittel und Luft (Minimalmengenschmierung) zum Schmieren und Kühlen des Bohrkopfs und der Führungsleisten sowie zum Ausspülen der Späne gefördert. Kühlmittel wird am hinteren Ende unter Druck zugeführt, passiert den Kühlkanal und tritt am Bohrkopf aus. Der Druck ist abhängig vom Durchmesser und von der Länge des Bohrers.

Durch einen angepassten Druck des Kühlmittels können Einlippenbohrer und Zweilippenbohrer sehr kleine und sehr tiefe Bohrungen in einem Zug bohren.

Als **Mittenverlauf** wird beim Bohrvorgang die Abweichung [mm] des tatsächlichen Bohrungsverlaufs von der theoretischen Mittelachse des Bohrers angesehen. Der Mittenverlauf ist ein Aspekt der Bohrungsqualität. Man ist bestrebt einen möglichst kleinen Mittenverlauf zu erreichen. Im Idealfall tritt überhaupt kein Mittenverlauf auf.

Der Mittenverlauf hängt unter anderem davon ab, ob die Drehbewegung durch den Bohrer oder das Werkstück oder durch beide erfolgt. Die Erfahrung zeigt, dass die kleinsten Mittenverlaufswerte erzielt werden, wenn die Drehbewegung durch das Werkstück oder durch Werkstück und Bohrer erfolgt.

Eine **Mulde** ist eine in die Spanfläche eingearbeitete Vertiefung. Anders als bei einem Spanformer schließt die Mulde nicht unmittelbar an die Schneide an. Das gleiche gilt in vielen Fällen auch bezüglich der Nebenschneide. Anders ausgedrückt: Zwischen der (Haupt-)Schneide und der Nebenschneide verbleibt ein schmaler Streifen der Spanfläche.

Durch **Nachschleifen** kann ein stumpf gewordener Einlippenbohrer oder Zweilippenbohrer wieder verwendet werden. Nachschleifen bedeutet ein meist stirnseitiges Nachsetzen/Abschleifen des verschlissenen Teils des Bohrkopfes, bis alle verschlissenen Bereiche (insbesondere von Spanfläche und Freifläche) abgetragen sind und wieder eine neue und scharfe Schneide entsteht. Danach weist der Anschliff wieder seine ursprüngliche Gestalt auf.

Als **Nebenschneide** wird die Berührungslinie (Kante) zwischen Spanfläche und Rundschlifffase bezeichnet. Der Schnittpunkt zwischen Außenschneide und Nebenschneide wird als **Schneidecke** bezeichnet.

Der Bohrkopf hat mindestens eine **Schneide,** es können auch mehrere Schneiden vorhanden sein. Die Schneide ist der Bereich, der an der Zerspanung beteiligt ist. Die Schneidkante oder Schneide ist die Schnittlinie von Spanfläche und Freifläche. Die Schneide ist meistens in mehrere gerade Teil-Schneiden aufgeteilt.

Die **Spanfläche** ist der Bereich, auf dem der Span abläuft; sie kann auch aus mehreren Teil-Flächen bestehen.

Ein **Spanformer** ist eine in die Spanfläche eingearbeitete parallel zur Schneide verlaufende und unmittelbar an die Schneide anschließende Vertiefung. Anders ausgedrückt: Zwischen Schneidkante und Spanformer ist keine Spanfläche vorhanden.

Ein **Spanteiler** stellt eine "Unterbrechung" der äußeren Schneide dar, welche die Breite der Späne reduziert.

## Patentansprüche

1. Tieflochbohrer umfassend einen Bohrkopf (5), wobei der Bohrkopf (5) eine Drehachse (3), einen Bohrdurchmesser (D), eine oder zwei Schneiden (17) aufweist, wobei jeder Schneide (17) eine Spanfläche (23) zugeordnet ist, und wobei er eine oder zwei Nebenschneiden (21) aufweist, **dadurch gekennzeichnet, dass** in jeder Spanfläche (23) in Richtung der Drehachse (3) voneinander beabstandet mehrere Spanformer (33, 35) und/oder mehrere Mulden (37) angeordnet sind.

2. Tieflochbohrer nach Anspruch 1, **dadurch gekennzeichnet, dass** der Tieflochbohrer ein Einlippenbohrer (1) mit einer Spanfläche (23) ist.

3. Tieflochbohrer nach Anspruch 1, **dadurch gekennzeichnet, dass** der Tieflochbohrer ein Zweilippenbohrer mit zwei Spanflächen (23) ist.

4. Tieflochbohrer nach einem der vorhergehenden Ansprüche, **dadurch gekennzeichnet, dass** die Spanformer (33) und/oder die Mulden (37) in einer orthogonal zu der Schneide (17.2) verlaufenden Schnittebene (C) die Form eines gleichschenkligen oder ungleichschenkligen Dreiecks aufweisen.

5. Tieflochbohrer nach einem der Ansprüche 1 bis 3, **dadurch gekennzeichnet, dass** die Spanformer (35) und/oder die Mulden (37) in einer orthogonal zu der Schneide (17.2) verlaufenden Schnittebene (C) mindestens bereichsweise gekrümmt sind.

6. Tieflochbohrer nach einem der vorhergehenden Ansprüche, **dadurch gekennzeichnet, dass** die Mulden (37) in einer orthogonal zu der Schneide (17.2) verlaufenden Schnittebene (C) die Form eines Kreisbogens aufweisen.

7. Tieflochbohrer nach einem der vorhergehenden Ansprüche, **dadurch gekennzeichnet, dass** ein Abstand (S₁) zwischen einem Rand (39) der ersten Mulde (37) und der Schneide (17.2) mindesten 0,05 mm, bevorzugt 0,10 mm, besonders bevorzugt 0,15 mm oder mehr beträgt.

8. Tieflochbohrer nach einem der vorhergehenden Ansprüche, **dadurch gekennzeichnet, dass** ein Abstand (S₂) zwischen dem Rand (39) der Spanformer (33, 35) oder der Mulden (37) und der Nebenschneide (21) mindesten 0,05 mm, bevorzugt 0,10 mm, besonders bevorzugt 0,15 mm oder mehr beträgt.

9. Tieflochbohrer nach einem der vorhergehenden Ansprüche, **dadurch gekennzeichnet, dass** er mehrere Reihen von Spanformern (35.1i bis 35.ni, 35.1a bis 35.na) und/oder Mulden (37.1i bis 37.ni, 37.1a bis 37.na) umfasst.

10. Tieflochbohrer nach einem der vorhergehenden Ansprüche, **dadurch gekennzeichnet, dass** er einen Spanteiler (43) umfasst, welcher die Schneide (17.2) in einen inneren Abschnitt (17.2i) und einen äußeren Abschnitt (17.2a) teilt.

11. Tieflochbohrer nach Anspruch 10, **dadurch gekennzeichnet, dass** dem inneren Abschnitt (17.2i) der Schneide (17) eine Reihe von Spanformern (35.1i bis 35.ni) oder Mulden (37.1i bis 37.ni) zugeordnet ist.

12. Tieflochbohrer nach Anspruch 10 oder 11, **dadurch gekennzeichnet, dass** dem äußeren Abschnitt (17.2a) der Schneide (17) eine Reihe von Spanformern (35.1a bis 35.na) oder Mulden (37.1a bis 37.na) zugeordnet ist.

13. Tieflochbohrer nach einem der vorhergehenden Ansprüche, **dadurch gekennzeichnet, dass** er mindestens eine Führungsleiste (31) aufweist.

14. Tieflochbohrer nach einem der vorhergehenden Ansprüche, **dadurch gekennzeichnet, dass** der Bohrkopf (5) vor dem ersten Nachschleißen ganz oder teilweise mit einer Hartstoffbeschichtung versehen ist.

15. Verfahren zum Herstellen eines Tieflochbohrers nach einem der vorhergehenden Ansprüche, umfassend die folgenden Schritte:
Herstellen eines erfindungsgemäßen Bohrkopfs (5) mit einer oder zwei Spanflächen (23), indem in mindestens einer Spanfläche (23) mehrere Spanformer (33, 35) und/oder Mulden (37) durch Schleifen, Erodieren oder Antragen mittels Laserstrahl eingebracht werden.

16. Verfahren nach Anspruch 15, **dadurch gekennzeichnet, dass** mindestens ein Teil der Oberfläche des Bohrkopfs (5) mit einer Funktionsbeschichtung versehen wird.

## Claims

1. A deep-hole drill comprising a drill head (5), wherein the drill head (5) has an axis of rotation (3), a drill diameter (D), one or two cutting edges (17), wherein each cutting edge (17) being associated with a rake face (23), and having one or two secondary cutting edges (21) **characterized in that** in each rake face (23) in the direction of the axis of rotation (3) several chip formers (33, 35) and/or several troughs (37) are arranged spaced from one another in the direction of the axis of rotation (3).

2. Deep-hole drill according to claim 1, **characterized in that** the deep-hole drill is a single-lip drill (1) with one rake face (23).

3. Deep-hole drill according to claim 1, **characterized in that** the deep-hole drill is a two-lip drill with two rake faces (23).

4. Deep-hole drill according to one of the preceding claims, **characterized in that** the chip formers (33) and/or the troughs (37) in an intersecting plane (C) running orthogonal to the cutting edge (17.2) have the shape of an isosceles or of a non-isosceles triangle.

5. Deep-hole drill according to one of claims 1 to 3, **characterized in that** the chip formers (35) and/or the troughs (37) in an intersecting plane (C) running orthogonal to the cutting edge (17.2) are curved at least in certain areas.

6. Deep-hole drill according to one of the preceding claims, **characterized in that** the troughs (37) in an intersecting plane (C) running orthogonal to the cutting edge (17.2) have the form of a circular arc.

7. Deep-hole drill according to one of the preceding claims, **characterized in that** a distance (S₁) between an edge (39) of the first trough (37) and the cutting edge (17.2) is at least 0.05 mm, preferably 0.10 mm, particularly preferably 0.15 mm or more.

8. Deep-hole drill according to one of the preceding Claims, **characterized in that** a distance (S₂) between the edge (39) of the chip formers (33, 35) or of the troughs (37) and the secondary cutting edge (21) is at least 0.05 mm, preferably 0.10 mm, particularly preferably 0.15 mm or more.

9. Deep-hole drill according to one of the preceding claims, **characterized in that** it comprises several rows of chip formers (35.1i to 35.ni, 35.1a to 35.na) and/or troughs (37.1i to 37.ni, 37.1a to 37.na).

10. Deep-hole drill according to one of the preceding claims, chara00cterized in that it comprises a chip splitter (43), which divides the cutting edge (17.2) into an inner section (17.2i) and an outer section (17.2a).

11. Deep-hole drill according to claim 10, **characterized in that** a series of chip formers (35. 1i to 35.ni) or troughs (37.1i to 37.ni) is assigned to the inner section (17.2i) of the cutting edge (17).

12. Deep-hole drill according to claim 10 or 11, **characterized in that** a series of chip formers (35.1a to 10 35.na) or troughs (37.1a to 37.na) is assigned to the outer section (17.2a) of the cutting edge (17).

13. Deep-hole drill according to one of the preceding claims, **characterized in that** it comprises at least a guide bar (31) .

14. Deep-hole drill according to any one of the preceding claims, **characterized in that** the drilling head (5) before the first regrinding is completely or partially provided with a hard material coating.

15. Method of manufacturing a deep-hole drill according to one of the preceding claims, comprising the following steps:
Manufacture of a drill head (5) according to the invention with one or two rake faces (23), by forming in at least one rake face (23) a plurality of chip formers (33, 35) and/or troughs (37) by grinding, eroding or abrading by means of a laser beam.

16. Method according to claim 15, **characterized in that** at least a part of the surface of the drill head (5) is provided with a functional coating.

## Revendications

1. Foret pour trous profonds comprenant une tête de forage (5), dans lequel la tête de forage (5) présente un axe de rotation (3), un diamètre de forage (D), un ou deux tranchants (17), dans lequel une face de coupe (23) est associée à chaque tranchant (17), et dans lequel il présente un ou deux tranchants secondaires (21), **caractérisé en ce que** plusieurs éléments de formation de copeaux (33, 35) et/ou plusieurs cavités (37) sont disposés dans chaque face de coupe (23) en direction de l'axe de rotation (3) à distance les uns des autres.

2. Foret pour trous profonds selon la revendication 1, **caractérisé en ce que** le foret pour trous profonds est un foret à une lèvre (1) avec une face de coupe (23).

3. Foret pour trous profonds selon la revendication 1, **caractérisé en ce que** le foret pour trous profonds est un foret à deux lèvres avec deux faces de coupe (23).

4. Foret pour trous profonds selon l'une quelconque des revendications précédentes, **caractérisé en ce que** les éléments de formation de copeaux (33) et/ou les cavités (37) présentent dans un plan de coupe (C) s'étendant perpendiculairement au tranchant (17.2) la forme d'un triangle isocèle ou scalène.

5. Foret pour trous profonds selon l'une quelconque des revendications 1 à 3, **caractérisé en ce que** les éléments de formation de copeaux (35) et/ou les cavités (37) sont courbés au moins par endroits dans un plan de coupe (C) s'étendant perpendiculairement au tranchant (17.2).

6. Foret pour trous profonds selon l'une quelconque des revendications précédentes, **caractérisé en ce que** les cavités (37) présentent dans un plan de coupe (C) s'étendant perpendiculairement au tranchant (17.2) la forme d'un arc de cercle.

7. Foret pour trous profonds selon l'une quelconque des revendications précédentes, **caractérisé en ce qu'**un écart (S₁) entre un bord (39) de la première cavité (37) et le tranchant (17.2) atteint au moins 0,05 mm, de préférence 0,10 mm, de manière particulièrement préférée 0,15 mm ou plus.

8. Foret pour trous profonds selon l'une quelconque des revendications précédentes, **caractérisé en ce qu'**un écart (S₂) entre le bord (39) des éléments de formation de copeaux (33, 35) ou les cavités (37) et le tranchant secondaire (21) atteint au moins 0,05 mm, de préférence 0,10 mm, de manière particulièrement préférée 0,15 mm ou plus.

9. Foret pour trous profonds selon l'une quelconque des revendications précédentes, **caractérisé en ce qu'**il comprend plusieurs rangées d'éléments de formation de copeaux (35.1i à 35.ni, 35.1a à 35.na) et/ou cavités (37.1i à 37.ni, 37.1a à 37.na).

10. Foret pour trous profonds selon l'une quelconque des revendications précédentes, **caractérisé en ce qu'**il comprend un brise-copeaux (43), lequel divise le tranchant (17.2) en une partie intérieure (17.2i) et une partie extérieure (17.2a).

11. Foret pour trous profonds selon la revendication 10, **caractérisé en ce qu'**une rangée d'éléments de formation de copeaux (35.1i à 35.ni) ou cavités (37.1i à 37.ni) est associée à la partie intérieure (17.2i) du tranchant (17) .

12. Foret pour trous profonds selon la revendication 10 ou 11, **caractérisé en ce qu'**une rangée d'éléments de formation de copeaux (35.1a à 35.na) ou cavités (37.1a à 37.na) est associée à la partie extérieure (17.2a) du tranchant (17).

13. Foret pour trous profonds selon l'une quelconque des revendications précédentes, **caractérisé en ce qu'**il présente au moins une barre de guidage (31).

14. Foret pour trous profonds selon l'une quelconque des revendications précédentes, **caractérisé en ce que** la tête de forage (5) est pourvue entièrement ou partiellement d'un revêtement de matériau dur avant le premier réaffûtage.

15. Procédé pour fabriquer un foret pour trous profonds selon l'une quelconque des revendications précédentes, comprenant les étapes suivantes:
la fabrication d'une tête de forage (5) selon l'invention avec une ou deux faces de coupe (23), du fait que plusieurs éléments de formation de copeaux (33, 35) et/ou cavités (37) sont ménagés dans au moins une face de coupe (23) par affûtage, érosion ou application au moyen d'un faisceau laser.

16. Procédé selon la revendication 15, **caractérisé en ce qu'**au moins une partie de la surface de la tête de forage (5) est pourvue d'un revêtement fonctionnel.
